# EUROPEAN PATENT SPECIFICATION

(11) **EP 2 151 559 B1**
(45) Date of publication and mention of the grant of the patent: **06.04.2011**
(21) Application number: 08425562.9
(22) Date of filing: 08.08.2008
(51) Int. Cl.: F01N 3/20, F01N 9/00

(54) **Injection device for injecting a reducing substance into an exhaust system of an internal combustion engine**
Einspritzvorrichtung zum Einspritzen einer Verringerungssubstanz in ein Abgassystem in einem Verbrennungsmotor
Dispositif d'injection pour l'injection d'une substance réductrice dans un système d'échappement d'un moteur à combustion interne

(43) Date of publication of application: 10.02.2010
(73) Proprietor: Magneti Marelli S.p.A., Corbetta (MI) (IT)
(72) Inventor: Cominetti, Paolo, 40137 Bologna (IT); Osbat, Giovanni, 48025 Riolo Terme (IT)
(74) Representative: Bergadano, Mirko

(56) References cited:
- WO-A-2005/005799
- WO-A-2006/074833
- WO-A-2008/006840
- WO-A-2008/058977
- US-A1- 2005 252 201

## Description

### TECHNICAL FIELD

The present invention relates to an injection device for injecting a reducing substance into an exhaust system of an internal combustion engine provided with exhaust gas post-treatment.

### BACKGROUND ART

Future international standards related to the limitation of polluting gas emissions produced by cars (the so-called "Euro5" and "Euro6" or "Tier2 Bin5" standards) provide for a very low limit for NOₓ molecules which may be released into the atmosphere.

Respecting such limits is particularly critical, especially for Diesel engines; for such a reason, it has been suggested to equip the exhaust system of a Diesel engine with a further SCR (Selective Catalytic Reduction) catalytic converter for NOₓ, adapted to convert the NOₓ (NO₂ or NO) molecules into nitrogen (N₂), which is an inert gas, and water (H₂O). The reduction reaction of NOₓ molecules into nitrogen (N) is difficult to be obtained without using an appropriate reducing agent, which is generally identified in ammonia (NH₃). The reducing agent must be injected into the exhaust system upstream of the SCR catalytic converter in order to be mixed with the exhaust gases before being introduced into the SCR catalytic converter.

However, storing ammonia inside a car is not advisable due to evident safety reasons related to the fact that ammonia is toxic. Therefore, storing and injecting an aqueous urea solution has been suggested, because urea is broken down into ammonia, by effect of the exhaust gas heat and also in part by catalytic effect.

For injecting the aqueous urea solution upstream of the SCR catalytic converter, using an electromagnetic injector entirely similar to the electromagnetic injectors currently used for injecting fuel into internal combustion engines has been suggested. In this way, existing components of proven efficiency and reliability may be used and thus there is no need to develop new components, with evident saving of both costs and time. Specifically, an injection device which is comprised of a tank containing the aqueous urea solution and a pump which draws the pressurized aqueous urea solution from the tank to feed it to the electromagnetic injector by means of a feeding pipe is used.

However, assembling an electromagnetic injector designed for injecting fuel in an exhaust pipe arranged immediately upstream of an SCR catalytic converter has been proven to be particularly problematic, because the temperatures inside the exhaust pipe are very high (from a minimum of approximately 150°C to a maximum of approximately 900°C during the regeneration steps) and an excessive overheating of the electromagnetic injector may be produced with the consequent destruction of the electromagnetic injector itself. By way of example, the temperature of the external liner of a currently manufactured electromagnetic injector must not exceed approximately 150°C to avoid melting the insulation of the copper conductor forming the electromagnet coil, while the tip of a currently manufactured electromagnetic injector must not exceed approximately 25°C to avoid steel annealing phenomena, which could alter the mechanical properties thereof. Furthermore, it is worth mentioning that in addition to ensuring an adequate thermal insulation of the electromagnetic injector from the heat of the exhaust system, it is also necessary to ensure an effective disposal of the heat which has been transmitted by conduction and radiation to the injector and of the heat produced by Joule effect by the coil of the electromagnet inside the electromagnetic injector at the same time.

An aqueous urea solution freezes at a temperature (approximately -11°C) which may be reached by a vehicle parked outside during the winter and in cold climates. In order to avoid damages caused by freezing the aqueous urea solution in the electromagnetic injector and in the feeding pipe, the future international standards require the electromagnetic injector and feeding pipe to be emptied when the internal combustion engine is stopped.

In order to empty the electromagnetic injector and the feeding pipe when the internal combustion engine is stopped, it has been suggested to use a reversible pump which is actuated to draw back the aqueous urea solution into the electrometric injector and the feeding pipe; such an operation requires the electromagnetic injector to be opened to aspirate air into the electromagnetic injector and the feeding pipe as the pump empties the electromagnetic injector and the feeding pipe. However, by operating in this manner, the air inside the exhaust pipe may be aspired into the electromagnetic injector and the feeding pipe, which air may have a very high temperature on one hand and may have a very high concentration of contaminating/fouling elements (e.g. course particulate) on the other hand; accordingly, by operating in this manner, there is the risk of overheating the electromagnetic injector and the pump, and the risk of fouling the electromagnetic injector. Specifically, course particulate in the air aspirated from the exhaust pipe may rapidly obstruct the electromagnetic injector filter; furthermore, the very hot air from the exhaust could cause a rapid evaporation of the aqueous urea solution inside the electromagnetic injector and thus lead to the formation of crystalline deposits inside the electromagnetic injector itself. With this regard, it is worth noting that the decomposition of urea also determines the formation of isocyanic acid (HNCO), which could thicken and polymerize and thus settle on the internal walls of the electromagnetic injector forming solid crystalline foulings which are difficult to be removed.

WO2005005799A1 discloses a device for metering reducing agent to the exhaust gas of a combustion engine comprising an injector to which reducing agent is supplied from a reservoir via an inlet. The injector has a sealing seat and a moving plunger that, when lifting from the sealing seat, enables a flow of reducing agent to the exhaust gas; the piston is lifted from the sealing seat by a pressure of the reducing agent.

WO2008006840A1 discloses a system for storing an additive solution and injecting it into the exhaust gases of an internal combustion engine, the system comprising a tank for storing the additive, a rotary pump, a metering valve, and an injector; the pump outlet pressure is regulated by adjusting the rotational speed of the pump.

### DISCLOSURE OF INVENTION

It is the object of the present invention to provide an injection device for injecting a reducing substance into an exhaust system of an internal combustion engine provided with exhaust gas post-treatment, which injection device is easy and cost-effective to be manufactured, free from the above-described drawbacks and, specifically, ensures an appropriate emptying of a feeding pipe when the internal combustion engine is stopped, and is resistant to the heat in the exhaust system.

According to the present invention, there is provided an injection device for injecting a reducing substance into an exhaust system of an internal combustion engine provided with exhaust gas post-treatment as claimed in the appended claims.

### BRIEF DESCRIPTION OF THE DRAWINGS

The present invention will now be described with reference to the accompanying drawings, which illustrate some non-limitative embodiments thereof, in which:
- figure 1 is a diagrammatic view of an exhaust system of an internal combustion engine provided with an injection device for injecting a reducing substance, which is made in accordance with the present invention;
- figure 2 is a diagrammatic, side view with parts removed for clarity of a mechanical injector of the injection device in figure 1;

- figure 3 is a diagrammatic, side view with parts removed for clarity of a different embodiment of the mechanical injector in figure 2;
- figure 4 is a diagrammatic, side section with parts removed for clarity of a further embodiment of the mechanical injector in figure 2; and
- figure 5 is a section taken along line V-V of the mechanical injector in figure 5.

### PREFERRED EMBODIMENTS OF THE INVENTION

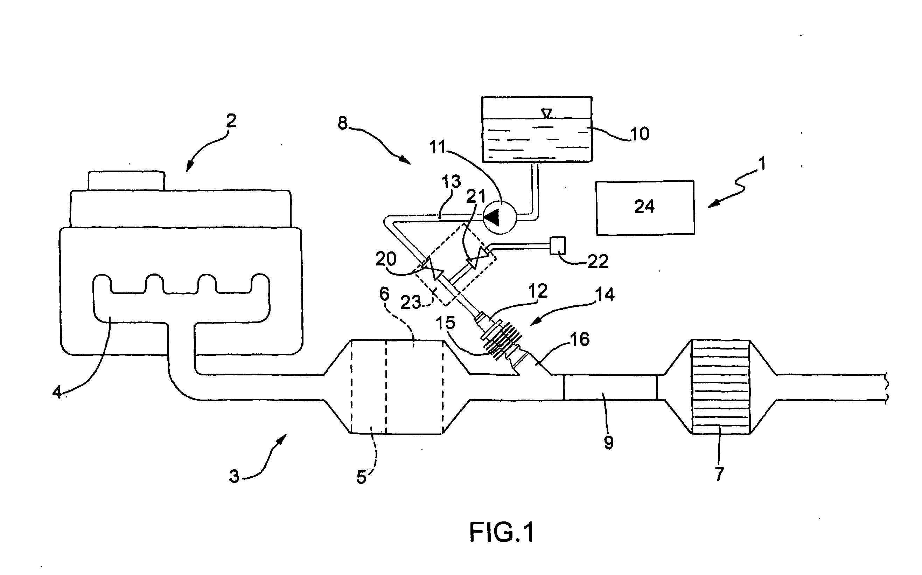

In figure 1, numeral 1 indicates as a whole an exhaust system of an internal combustion engine 2 working according to the "Diesel" cycle (i.e. fed with diesel fuel or the like).

The exhaust system 1 emits the gases produced by the combustion into the atmosphere and comprises an exhaust pipe 3 which departs from an exhaust manifold 4 of the internal combustion engine 2. An oxidizing catalytic converter 5 and a particulate filter 6 are arranged along exhaust pipe 3; in figure 1, the oxidizing catalytic converter 5 and the particulate filter 6 are arranged one after the other within a same, common tubular container.

Furthermore, an SCR (Selective Catalytic Reduction) catalytic system 7 for post-treating the NOₓ molecules (NO and NO₂) is arranged along the exhaust pipe 3 and downstream of the oxidizing catalytic converter 5. The SCR catalytic system 7 may comprise a single SCR catalytic converter 7, as shown in figure 1, or may comprise a set (normally three) of catalytic converters, which jointly optimize the SCR function for the post-treatment of NOₓ molecules.

An injection device 8 is coupled to the exhaust pipe 3 immediately upstream of the catalytic system 7, which injection device 8 is adapted to inject a reducing additive, and specifically an aqueous urea solution (i.e. a solution of urea and water) into the exhaust pipe 3 itself. In use, by effect of the exhaust gases heat inside the exhaust pipe 3, the urea injected into the exhaust pipe 3 itself spontaneously decomposes into isocyanic acid (HNCO) and ammonia (NH₃), which works as reducing agent inside the catalytic system 7 to promote the decomposing reaction of the NOₓ molecules into nitrogen (N₂) and water (H₂O).

A static mixer 9 is inserted at the injection device 8 along the exhaust pipe 3, which mixer serves the function of generating turbulences in the exhaust gases inside the exhaust pipe 3 in order to prevent the localized thickening of the isocyanic acid (which is formed during the urea decomposition) and thus to prevent the polymerization of the isocyanic acid itself and so as to increase the efficiency of the catalytic system 7, by making the dispersion of ammonia more homogenous in the exhaust gases. In the embodiment shown in figure 1, the static mixer 9 is arranged downstream of the injection device 8; alternatively, the static mixer 9 may be arranged upstream of the injection device 8.

The injection device 8 is comprised of a tank 10 containing the aqueous urea solution and a pump 11 which draws from the tank 10 to feed the pressurized aqueous urea solution to a passive mechanical injector 12 (i.e. without controllable actuators) through a feeding pipe 13. It is worth noting that the pump 11 is reversible, i.e. may be actuated in one direction to aspirate the aqueous urea solution from the tank 10 and feed the aqueous urea solution itself into the feeding pipe 13, and may be actuated in the opposite direction to aspirate the aqueous urea solution from the feeding pipe 13 and feed the aqueous urea solution itself into the tank 10.

The passive injector 12 is adapted to inject the atomized aqueous urea solution into the exhaust pipe 3 and is fixed to the exhaust pipe 3 by means of an assembling device 14 which comprises a tubular support body 15; the tubular support body 15 of the assembling device 14 is made of thermally conductive material (typically steel), accommodates the passive injector 12 therein, and at a lower end thereof is adapted to be butt coupled to a connecting tube 16, which laterally and obliquely protrudes from the exhaust pipe 3. An embodiment of the tubular support body 15 is provided in patent application EP2008425206.3, incorporated herein by reference.

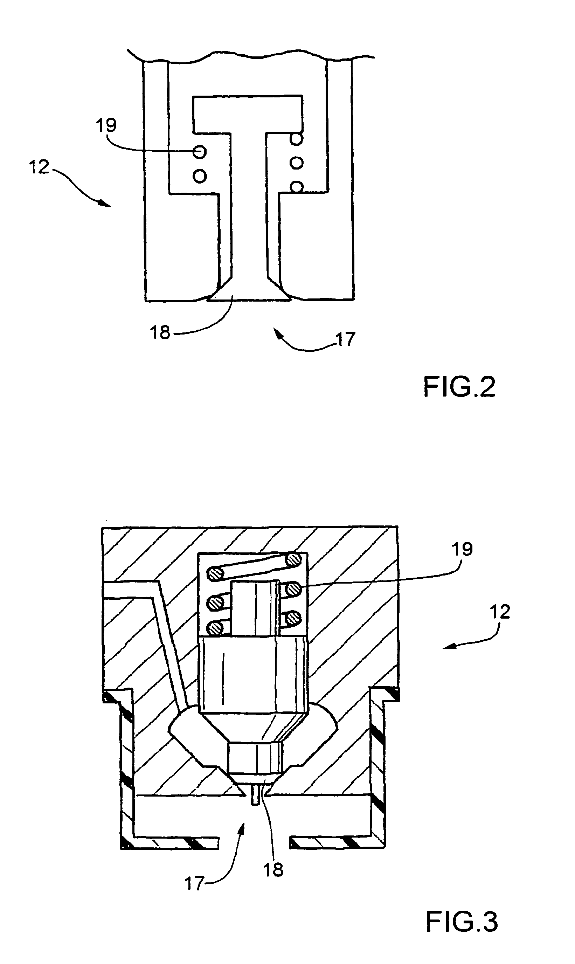

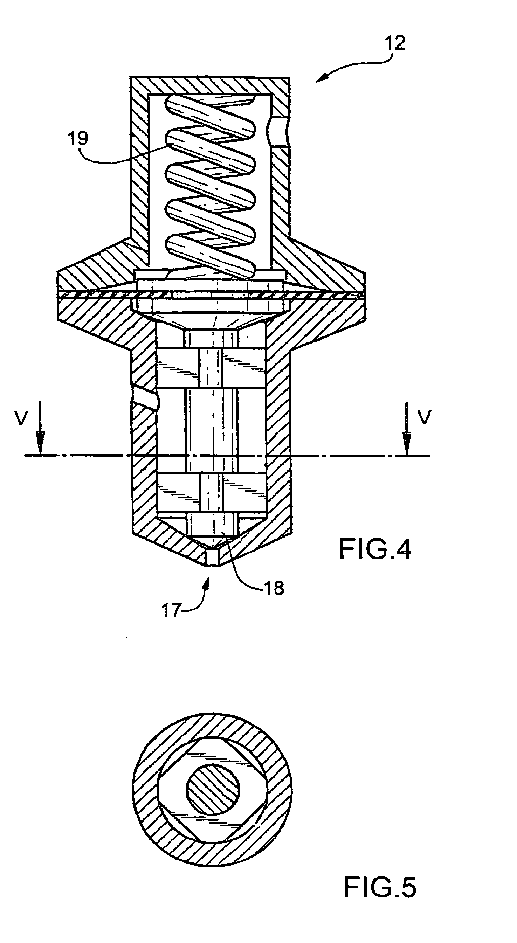

As previously mentioned and as shown in figures 2-5, the mechanical injector 12 is of the passive type, i.e. without controllable actuators, and comprises an injection nozzle 17 (provided with a mechanical atomizer), by means of which the aqueous urea solution is injected and atomized into the exhaust pipe 3. Furthermore, the mechanical injector 12 comprises a shutter 18 mobily mounted to be displaced between a closing position, in which the shutter 18 prevents the aqueous urea solution from flowing through the injection nozzle 17, and an opening position, in which the shutter 18 allows the aqueous urea solution to flow through the injection nozzle 17. Finally, the mechanical injector 12 comprises a spring 19 which biases the shutter 18 towards the closing position by means of a predetermined force, in order to keep the shutter 18 itself in this position. The mechanical injector 12 is constructed so that the pressure of the aqueous urea solution inside the mechanical injector 12 tends to push the shutter 18 towards the opening position against the bias of the spring 19. Therefore, when the pressure of the aqueous urea solution is sufficiently high (i.e. higher than a pressure threshold value), it overcomes the elastic bias generated by the spring 19 and thus moves the shutter 18 towards the opening position; similarly, when the pressure of the aqueous urea solution is reduced (i.e. drops below the pressure threshold value), the elastic bias generated by the spring 19 prevails and thus the shutter 18 is biased towards the closing position.

In other words, the mechanical injector 12 is pressure-controlled, because when the pressure of the aqueous urea solution fed to the mechanical injector 12 is higher than the pressure threshold value, then the mechanical injector 12 injects the aqueous urea solution into the exhaust pipe 3, whereas when the pressure of the aqueous urea solution fed to the mechanical injector 12 is lower than the pressure threshold value, then the mechanical injector 12 does not inject the aqueous urea solution into the exhaust pipe 3.

Since the mechanical injector 12 is of the passive type, i.e. without controllable actuators and specifically without electric wires insulated with plastic materials or the like, the mechanical injector 12 is only formed by metal components (specifically steel), which are especially heat resistant and may support particularly high temperatures (even higher than 250°-300° C) without any damages. Furthermore, since the mechanical actuator 12 is of the passive type, i.e. without controllable actuators, there is no heat generation inside the mechanical injector 12 and therefore no disposal of the heat generated inside the mechanical injector 12 is required. Finally, the internal structure of the mechanical injector 12 is simple and formed only by mechanical parts of relatively large size (unlike a traditional electromagnetic injector) which may tolerate even very high heating without any problems; in this manner, the mechanical injector 12 is able to tolerate particularly high temperatures (even higher than 250°-300° C).

The injection device 8 further comprises a shut-off solenoid valve 20, which is electrically drivable and is arranged along the feeding pipe 13 between the pump 11 and the mechanical injector 12; in use, the shut-off solenoid valve 20 is driven to control the feeding of the pressurized aqueous urea solution from the pump 11 to the mechanical injector 12 and therefore to control when to inject the aqueous urea solution into the exhaust pipe 3. The shut-off solenoid valve 20 is arranged at an appropriate distance from the mechanical injector 12 (and thus from the exhaust pipe 3) so as to be naturally shielded from the heat inside the exhaust pipe 3 and thus not to be subjected to excessive heating by effect of the heat inside the exhaust pipe 3.

Finally, the injection device 8 comprises a relief valve 21, which is arranged along the feeding pipe 13 between the shut-off solenoid valve 20 and the mechanical injector 12, and is adapted to connect the feeding pipe 13 to an air intake 22 which communicates with the atmosphere and which may be provided with a mechanical filter. According to a different embodiment (not shown), the air intake 22 does not communicate with the atmosphere, but communicates with the exhaust pipe 3 downstream of the SCR catalytic system (and, if present downstream of the particulate filter 6 or DPF); it is worth noting that downstream of the SCR catalytic system 7, the gases inside the exhaust pipe 3 are relatively clean and have a relatively low temperature.

Preferably, the relief valve 21 is a solenoid valve (i.e. provided with a remotely drivable electric actuator) and is movable between a closing position, in which the feeding pipe 13 is isolated from the air intake 22, and an opening position, in which the feeding pipe 13 is connected to the air intake 22. Alternatively, the relief valve 21 might not comprise a remotely drivable electric actuator and, for example, might be based on two-metal or PTC technology.

According to a preferred embodiment, the shut-off solenoid valve 20 and the relief solenoid valve 21 are integrated in a single support body 23 arranged between the pump 11 and the mechanical injector 12. In this manner, the shut-off solenoid valve 20 is also arranged at an appropriate distance from the mechanical injector 12 (and thus from the exhaust pipe 3) so as to be naturally shielded from the heat inside the exhaust pipe 3 and therefore not to be subjected to excessive heating by effect of the heat inside the exhaust pipe 3. According to a different embodiment (not shown), the relief solenoid valve 21 is separated from the shut-off solenoid valve 20 and is integrated in a hydraulic connector, which is coupled to an upper end of the mechanical injector 12 for hydraulically connecting the mechanical injector 12 itself to the feeding pipe 13.

Finally, the injection device 8 comprises a control unit 24, which drives the pump 11, the shut-off solenoid valve 20 and the relief solenoid valve 21.

When the internal combustion engine 1 is on, the control unit 24 keeps the relief solenoid valve 21 permanently closed, drives the pump 11 for feeding the pressurized aqueous urea solution to the mechanical injector 12 and cyclically drives the shut-off solenoid valve 20 to inject the atomized aqueous urea solution into the exhaust pipe 3. When the internal combustion engine 1 is stopped, the control unit 24 drives the pump 11, the mechanical injector 12 and the relief solenoid valve 21 as described below to empty the feeding pipe 13 of the aqueous urea solution.

When the internal combustion engine 1 is stopped, the control unit 24 actuates the pump 11 for aspirating the aqueous urea solution from the feeding pipe 13 and feeding the aqueous urea solution itself into the tank 10. Subsequently, the control unit 24 opens the shut-off solenoid valve 20 and the relief solenoid valve 21 for communicating the feeding pipe 13 and the atmosphere; in this manner, air from the atmosphere is aspirated through the air intake 22 into the feeding pipe 13 as the pump 11 empties the feeding pipe 13 itself.

Preferably, the control unit 24 does not open the shut-off solenoid valve 20 and the relief solenoid valve 21 at the same time or immediately after actuating the pump 11 for aspirating the aqueous urea solution from the feeding pipe 13; specifically, before opening the shut-off solenoid valve 20 and the relief solenoid valve 21, the control unit 24 waits for a predetermined time interval T1, fixed during the step of designing, in order to let the pump 11 reduce the residual pressure of the aqueous urea solution inside the feeding pipe 13. In other words, when the internal combustion engine 1 is on, the pump 11 keeps the aqueous urea solution pressurized inside the feeding pipe 13 and, when the internal combustion engine 1 is stopped, the aqueous urea solution inside the feeding pipe 13 has a relatively high residual pressure; under these conditions, if the relief solenoid valve 20 is opened at the same time or nearly at the same time as the pump 11 is actuated for aspirating the aqueous urea solution from the feeding pipe 13, an undesired opening of the mechanical injector 12 will be caused by effect of the residual pressure of the aqueous urea solution inside the feeding pipe 13. Furthermore, under these conditions, if the relief solenoid valve 21 is opened at the same time or nearly at the same time as the pump 11 is actuated for aspirating the aqueous urea solution from the feeding pipe 13, part of the pressurized aqueous urea solution inside the feeding pipe 13 will exit through the air intake 22. On the other hand, by waiting for an interval of time before opening the relief solenoid valve 21, the pump 11 may reduce the residual pressure of the aqueous urea solution inside the feeding pipe 13; therefore, when the shut-off solenoid valve 20 and the relief solenoid valve 21 are opened, the residual pressure of the aqueous urea solution inside the feeding pipe 13 is low (typically lower than the atmospheric pressure) and therefore no leakage of aqueous urea solution through the air intake 22 and/or through the mechanical injector 12 occurs.

Once the relief valve 21 has been opened, the control unit 24 waits for a predetermined time interval T2, fixed during the step of designing, so that the pump 11 may fully empty the segment of the feeding pipe 13 between the relief solenoid valve 21 and the tank 10. Once the time interval T2 has elapsed, the control unit 24 stops the pump 11 and thus closes the shut-off solenoid valve 20 and the relief valve 21.

The above-described emptying procedure allows to fully empty the segment of the feeding pipe 13 between the relief solenoid valve 21 and the tank 10, and to fully empty also the relief solenoid valve 21 and the shut-off solenoid valve 20. On the other hand, some aqueous urea solution remains in the segment of the feeding pipe 13 between the relief solenoid valve 21 and the mechanical injector 12 and inside the mechanical injector 12 itself. However, the aqueous urea solution which remains in the segment of the feeding pipe 13 between the relief solenoid valve 21 and the mechanical injector 12 does not cause any damages in case of freezing because the length of such a segment is limited; furthermore, the aqueous urea solution which remains in the mechanical injector 12 does not also cause any damages in case of freezing, because the internal structure of the mechanical injector 12 is simple and only formed by relatively large sized mechanical parts (unlike a traditional electromagnetic injector) which may easily tolerate the mechanical stresses caused by the volume increasing of the frozen aqueous urea solution.

The above-described injection device 8 has many advantages, because it is simple and cost-effective to be manufactured, is particularly tough (and thus has a long working life and a very low risk of breakages) and, above all, allows to empty most of the feeding pipe 13, the shut-off solenoid valve 20 and the relief solenoid valve 21 in an especially effective, efficient, contraindication-free manner when the internal combustion engine 1 is stopped. Specifically, in virtue of the use of the relief solenoid valve 21, only the air from the atmosphere is aspirated into the feeding pipe 13, therefore essentially at ambient temperature and free from high concentrations of contaminating/fouling elements.

## Claims

1. An injection device (8) for injecting a reducing liquid additive into an exhaust system (1) of an internal combustion engine (2); the injection device (8) is comprised of:
a tank (10) containing the reducing liquid additive;
a pump (11) connected to the tank (10);
a passive mechanical injector (12) which is connected to the pump (11) by means of a feeding pipe (13), is adapted to inject the reducing additive into the exhaust pipe (3), and has a pressure-controlled movable shutter (18) to inject the reducing liquid additive only when the pressure of the reducing liquid additive is higher than a pressure threshold value; and
a shut-off solenoid valve (20), which is electrically drivable and is arranged along the feeding pipe (13) between the pump (11) and the mechanical injector (12) and, in use, is driven to control the feeding of the pressurized aqueous urea solution from the pump (11) to the mechanical injector (12) and therefore to control when to inject the reducing liquid additive into the exhaust pipe (3);
the injection device (8) is **characterized in that** it comprises a relief solenoid valve (21) which is arranged along the feeding pipe (13) between the shut-off solenoid valve (20) and the mechanical injector (12).

2. An injection device (8) according to claim 1, wherein the relief valve (21) is a solenoid valve and is movable between a closing position, in which the feeding pipe (13) is isolated from the relief intake (22), and an opening position, in which the feeding pipe (13) is connected to the air intake (22).

3. An injection device (8) according to claim 2, wherein the shut-off solenoid valve (20) and the relief solenoid valve (21) are integrated in a single support body (23) arranged between the pump (11) and the mechanical injector (12).

4. An injection device (8) according to claim 2 or 3 and comprising a control unit (24) which, when the internal combustion engine (2) is stopped:
actuates the pump (11) for aspirating the aqueous urea solution from the feeding pipe (13) and feeding the aqueous urea solution itself into the tank (10);
opens the shut-off solenoid valve (20) and the relief solenoid valve (21);
stops the pump (11) after a first time interval (T2); and
closes the shut-off solenoid valve (20) and the relief valve (21) after a first time interval (T2).

5. An injection device (8) according to claim 4, wherein the control unit (24) waits for a second time interval (T1) between the actuation of the pump (11) to aspirate the aqueous urea solution from the feeding pipe (13) and the opening of the shut-off solenoid valve (20) and of the relief solenoid valve (20).

6. An injection device (8) according to anyone of the claims from 1 to 5, wherein the relief valve (21) is adapted to connect the feeding pipe (13) to an air intake (22), which communicates with the atmosphere.

7. An injection device (8) according to anyone of the claims from 1 to 5, wherein the relief valve (21) is adapted to connect the feeding pipe (13) to the exhaust pipe (3) downstream of an SCR catalytic system (7).

8. An injection device (8) according to anyone of the claims from 1 to 7, wherein the mechanical injector (12) comprises:
an injection nozzle (17), through which the reducing liquid additive is injected and atomized into the exhaust pipe (3);
the shutter (18) movably mounted to be displaced between a closing position, in which the shutter (18) prevents the aqueous urea solution from flowing through the injection nozzle (17), and an opening position, in which the shutter (18) allows the aqueous urea solution to flow through the injection nozzle (17); and
a spring (19) which biases the shutter (18) towards the closing position by means of a predetermined force in order to keep the shutter itself (18) in this position;
wherein the mechanical injector (12) is constructed so that the pressure of the reducing liquid additive inside the mechanical injector (12) tends to push the shutter (18) towards the opening position against the bias of the spring (19).

## Patentansprüche

1. Einspritzvorrichtung (8) zum Einspitzen eines flüssigen Reduktionsadditivs in ein Abgassystem (1) eines Verbrennungsmotors (2); die Einspritzvorrichtung (8) setzt sich zusammen aus:
einem Behälter (10), der das flüssige Reduktionsadditiv enthält;
einer Pumpe (11), die mit dem Behälter (10) verbunden ist;
einem passiven mechanischen Injektor (12), der mittels eines Speiserohrs (13) mit der Pumpe (11) verbunden ist, der angepasst ist, das Reduktionsadditiv in das Abgasrohr (3) einzuspritzen, und der einen druckgeregelten, beweglichen Verschluss (18) besitzt, um das flüssige Reduktionsadditiv nur dann einzuspritzen, wenn der Druck des flüssigen Reduktionsadditivs höher als ein Druckschwellenwert ist; und
einem elektromagnetischen Absperrventil (20), das elektrisch ansteuerbar und entlang dem Speiserohr (13) zwischen der Pumpe (11) und dem mechanischen Injektor (12) angeordnet ist und im Einsatz angesteuert wird, um die Speisung der unter Druck stehenden, wässrigen Harnstofflösung aus der Pumpe (11) zum mechanischen Injektor (12) zu steuern und somit zu bestimmen, wann das flüssige Reduktionsadditiv in das Abgasrohr (3) eingespritzt wird;
die Einspritzvorrichtung (8) ist **dadurch gekennzeichnet, dass** sie ein elektromagnetisches Entlastungsventil (21) aufweist, das entlang dem Speiserohr (13) zwischen dem elektromagnetischen Absperrventil (20) und dem mechanischen Injektor (12) angeordnet ist.

2. Einspritzvorrichtung (8) gemäß Anspruch 1, bei der das Entlastungsventil (21) ein elektromagnetisches Ventil ist und zwischen einer Schließposition, in der das Speiserohr (13) vom Entlastungseintritt (22) getrennt ist, und einer Öffnungsposition, in der das Speiserohr (13) mit dem Lufteintritt (22) verbunden ist, beweglich ist.

3. Einspritzvorrichtung (8) gemäß Anspruch 2, bei der das elektromagnetische Absperrventil (20) und das elektromagnetische Entlastungsventil (21) in einen einzelnen Haltekörper (23) integriert sind, der zwischen der Pumpe (11) und dem mechanischen Injektor (12) angeordnet ist.

4. Einspritzvorrichtung (8) gemäß Anspruch 2 oder 3, mit einer Steuerungseinheit (24), die, wenn der Verbrennungsmotor (2) gestoppt wird:
die Pumpe (11) zum Ansaugen der wässrigen Harnstofflösung aus dem Speiserohr (13) und zum Speisen der wässrigen Harnstofflösung selbst in den Behälter (10) betätigt;
das elektromagnetische Absperrventil (20) und das elektromagnetische Entlastungsventil (21) öffnet;
die Pumpe (11) nach einem ersten Zeitintervall (T2) stoppt; und
das elektromagnetische Absperrventil (20) und das Entlastungsventil (21) nach einem ersten Zeitintervall (T2) schließt.

5. Einspritzvorrichtung (8) gemäß Anspruch 4, bei der die Steuerungseinheit (24) ein zweites Zeitintervall (T1) zwischen dem Betätigen der Pumpe (11) zum Ansaugen der wässrigen Harnstofflösung aus dem Speiserohr (13) und dem Öffnen des elektromagnetischen Absperrventils (20) und des elektromagnetischen Entlastungsventils (20) wartet.

6. Einspritzvorrichtung (8) gemäß einem der Ansprüche 1 bis 5, bei der das Entlastungsventil (21) angepasst ist, das Speiserohr (13) mit einem Lufteintritt (22), der mit der Atmosphäre kommuniziert, zu verbinden.

7. Einspritzvorrichtung (8) gemäß einem der Ansprüche 1 bis 5, bei der das Entlastungsventil (21) angepasst ist, das Speiserohr (13) mit dem Auspuffrohr (3) hinter einem SCR-Katalysatorsystem (7) zu verbinden.

8. Einspritzvorrichtung (8) gemäß einem der Ansprüche 1 bis 7, wobei der mechanische Injektor (12) aufweist:
eine Einspritzdüse (17), durch die das flüssige Reduktionsadditiv in das Auspuffrohr (3) eingespritzt und dort vernebelt wird;
den Verschluss (18), der beweglich befestigt ist, um zwischen einer Schließposition, in welcher der Verschluss (18) die wässrige Harnstofflösung daran hindert, durch die Einspritzdüse (17) zu fließen, und einer Öffnungsposition, in welcher der Verschluss (18) es der wässrigen Harnstofflösung erlaubt, durch die Einspritzdüse (17) zu fließen, verschoben zu werden; und
eine Feder (19), die den Verschluss (18) mit einer vorher bestimmten Kraft in Richtung der Schließposition vorspannt, um den Verschluss (18) selbst in dieser Position zu halten;
wobei der mechanische Injektor (12) so ausgeführt ist, dass der Druck des flüssigen Reduktionsadditivs innerhalb des mechanischen Injektors (12) bestrebt ist, den Verschluss (18) entgegen der Vorspannung der Feder (19) in Richtung der Öffnungsposition zu schieben.

## Revendications

1. Dispositif d'injection (8) destiné à injecter un additif liquide réducteur dans un système d'échappement (1) d'un moteur à combustion interne (2) ; le dispositif d'injection (8) est composé des éléments suivants :
un réservoir (10) contenant l'additif liquide réducteur ;
une pompe (11) reliée au réservoir (10) ;
un injecteur mécanique passif (12) qui est relié à la pompe (11) au moyen d'un tuyau d'alimentation (13), est adapté pour injecter l'additif réducteur dans le tuyau d'échappement (3), et comporte un obturateur mobile (8) commandé par pression pour injecter l'additif liquide réducteur uniquement lorsque la pression de l'additif liquide réducteur est supérieure à une valeur de seuil de pression ; et
une électrovanne de coupure (20) qui peut être actionnée électriquement, qui est agencée le long du tuyau d'alimentation (13) entre la pompe (11) et l'injecteur mécanique (12) et qui est activée, en utilisation, pour commander l'envoi de la solution aqueuse d'urée mise sous pression de la pompe (11) à l'injecteur mécanique (12) et ainsi pour commander le moment où injecter l'additif liquide réducteur dans le tuyau d'échappement (3) ;
le dispositif d'injection (8) est **caractérisé en ce qu'**il comprend une électrovanne de sûreté (21) qui est agencée sur la longueur du tuyau d'alimentation (13) entre l'électrovanne de coupure (20) et l'injecteur mécanique (12).

2. Dispositif d'injection (8) selon la revendication (1), dans lequel la vanne de sûreté (21) est une électrovanne et peut se déplacer entre une position de fermeture, dans laquelle le tuyau d'alimentation (13) est isolé de l'entrée de sûreté (22), et une position d'ouverture, dans laquelle le tuyau d'alimentation (13) est relié à l'entrée d'air (22).

3. Dispositif d'injection (8) selon la revendication 2, dans lequel l'électrovanne d'arrêt (20) et l'électrovanne de sûreté (21) sont intégrées dans un unique corps support (23) agencé entre la pompe (11) et l'injecteur mécanique (12).

4. Dispositif d'injection (8) selon la revendication 2 ou 3 et comprenant une unité de commande (24) qui, lorsque le moteur à combustion interne (2) est arrêté :
actionne la pompe (11) pour aspirer la solution aqueuse d'urée du tuyau d`alimentation (13) et introduire la solution aqueuse d'urée dans le réservoir (10) ;
ouvre l'électrovanne de coupure (20) et l'électrovanne de sûreté (21) ;
arrête la pompe (11) après un premier intervalle de temps (T2) ; et
ferme l'électrovanne de coupure (20) et la vanne de sûreté (21) après un premier intervalle de temps (T2).

5. Dispositif d'injection (8) selon la revendication 4, dans lequel l'unité de commande (22) attend un second intervalle de temps (T1) entre l'actionnement de la pompe (11) pour aspirer la solution aqueuse d'urée du tuyau d'alimentation (13) et l'ouverture de l'électrovanne de coupure (20) et de l'électrovanne de sûreté (21).

6. Dispositif d'injection (8) selon une quelconque des revendications 1 à 5, dans lequel la vanne de sûreté (21) est adaptée pour relier le tuyau d'alimentation (13) à une entrée d'air (22) qui communique avec l'atmosphère.

7. Dispositif d'injection (8) selon une quelconque des revendications 1 à 5, dans lequel la vanne de sûreté (21) est adaptée pour relier le tuyau d'alimentation (13) au tuyau d'échappement (3) en aval d'un système catalytique SRC (7).

8. Dispositif d'injection (8) selon une quelconque des revendicatrices 1 à 7, dans lequel l'injecteur mécanique (12) comprend :
une buse d'injection (17), à travers laquelle l'additif liquide réducteur est injecté et atomisé dans le tuyau d'échappement (3) ;
l'obturateur (18) monté mobile pour être déplacé entre une position de fermeture, dans laquelle l'obturateur (18) empêche la solution aqueuse d'urée de s'écouler par la buse d'injection (17), et une position d'ouverture, dans laquelle, l'obturateur (18) permet à la solution aqueuse d'urée de s'écouler par la buse d'injection (17), et
un ressort (19) qui sollicite rappelle l'obturateur (18) vers la position de fermeture au moyen d'une force prédéterminée afin de maintenir l'obturateur (18) lui-même dans cette position,
l'injecteur mécanique (12) étant construit de manière que la pression de l'additif liquide réducteur présent à l'intérieur de l'injecteur mécanique (12) tende à pousser l'obturateur (18) vers la position d'ouverture à l'encontre de la sollicitation du ressort (19).
